# EUROPÄISCHE PATENTSCHRIFT

(11) **EP 4 537 979 B1**
(45) Veröffentlichungstag und Bekanntmachung des Hinweises auf die Patenterteilung: **11.11.2026**
(21) Anmeldenummer: 25160940.0
(22) Anmeldetag: 14.12.2021
(51) Int. Cl.: B23C 5/10, B24B 3/02, B24B 3/06

(54) **ZERSPANUNGSWERKZEUG UND VERFAHREN ZUM SCHLEIFEN EINER SPANNUT EINES ZERSPANUNGSWERKZEUGS**
CUTTING TOOL AND METHOD FOR GRINDING A CHIP FLUTE OF A CUTTING TOOL
OUTIL D'USINAGE PAR ENLÈVEMENT DE COPEAUX ET PROCÉDÉ DE MEULAGE D'UNE RAINURE À COPEAUX D'UN OUTIL D'USINAGE PAR ENLÈVEMENT DE COPEAUX

(30) Priorität: 22.12.2020 DE 102020134565
(43) Veröffentlichungstag der Anmeldung: 16.04.2025
(62) Dokumentnummer(n) der früheren Anmeldung(en) nach Art. 76 EPÜ: 21839861.8 / 4 267 334
(73) Patentinhaber: Gühring KG, 72458 Albstadt (DE)
(72) Erfinder: Brunner, Michael, 72458 Albstadt (DE)
(74) Vertreter: Winter, Brandl - Partnerschaft mbB

(56) Entgegenhaltungen:
- DE-A1- 10 016 844
- DE-A1- 102016 200 404
- US-A1- 2018 001 398
- US-A1- 2018 036 810
- US-S- D 774 573

## Beschreibung

### Technisches Gebiet

Die Erfindung betrifft ein rundlaufendes Zerspanungswerkzeug, insbesondere einen Schaftfräser. Das Zerspanungswerkzeug weist einen sich entlang einer Werkzeugachse erstreckenden Schaft und einen an den Schaft anschließenden Schneidteil auf. An dem Schneidteil sind mehrere Zähne mit jeweils einer durch eine Freifläche und eine Spanfläche definierten Umfangsschneide und mehreren entlang der Zähne verlaufende Spannuten ausgebildet, die zum Schaft hin auslaufen. Das Querschnittsprofil jeder Spannut senkrecht zur Werkzeugachse ist durch die Spanfläche, eine den Kerndurchmesser bestimmende Nutgrundfläche und eine an die Freifläche eines in Werkzeugdrehrichtung nächstliegenden Zahns angrenzende Zahnrückenfläche definiert.

Ein solches Zerspanungswerkzeug ist beispielsweise aus der EP 2 100 683 B1 bekannt. Diese Druckschrift zeigt einen vierschneidigen Schaftfräser mit vier umfangsschneidenden Zähnen und dementsprechend vier Spannuten. Das Querschnittsprofil jeder Spannut senkrecht zur Werkzeugachse ist durch eine Spanfläche und eine an eine Freifläche des in Werkzeugdrehrichtung nächstliegenden Zahns angrenzende Nutgrundfläche definiert. Die Nutgrundfläche ist in einen an die Spanfläche angrenzenden Nuthauptabschnitt (entspricht der Nutgrundfläche in der vorliegenden Anmeldung) und einen an die Freifläche des in Werkzeugdrehrichtung nächstliegenden Zahns angrenzenden Nutunterabschnitt (entspricht der Zahnrückenfläche in der vorliegenden Anmeldung) unterteilt. Der Nuthauptabschnitt hat ein konkav gekrümmtes Querschnittsprofil, das an den Kerndurchmesser des Schaftfräsers heranreicht, während der radial weiter außenliegende Nutunterabschnitt ein linear geformtes Querschnittsprofil hat. Der Nuthauptabschnitt und Nutunterabschnitt laufen zum Schaft hin axial auf gleicher Höhe aus. Die Nutgrundfläche der Spannut ist somit über deren gesamte Länge durch eine der Verschneidungslinie des Nuthauptabschnitts und Nutunterabschnitts entsprechende, nach außen ragende Kante geprägt, die bei einer spanabhebenden Bearbeitung eines Werkstücks eine gleichmäßige Spannungsverteilung stört. Da die Spanabfuhr in erster Linie über den Nuthauptabschnitt erfolgt, muss dieser ein ausreichend großes Volumen haben, so dass der Kerndurchmesser nicht beliebig groß sein kann. Diese Faktoren gehen zu Lasten der Werkzeugstabilität.

Die Druckschrift US 2018/001398 A1 offenbart ein gattungsgemäßes rundlaufendes Zerspanungswerkzeug.

Es ist ausgehend von dem in der Druckschrift US 2018/001398 A1 offenbarten Zerspanungswerkzeug die Aufgabe der Erfindung, ein hochleistungsfähiges Zerspanungswerkzeug, insbesondere einen Schaftfräser, sowie ein Verfahren zum Schleifen einer Spannut eines derartigen Zerspanungswerkzeugs bereitzustellen, das sich durch eine hohe Standzeit, insbesondere bei kleinen Nenndurchmessern (≤ 3mm), und eine gute Spanabfuhr auszeichnet sowie wirtschaftlich herstellbar ist.

Diese Aufgabe wird durch ein Zerspanungswerkzeug mit den Merkmalen des Patentanspruchs 1 sowie durch ein Verfahren zum Schleifen einer Spannut eines Zerspanungswerkzeug mit den Merkmalen des nebengeordneten Patentanspruchs 10 gelöst. Vorteilhafte Weiterbildungen sind jeweils Gegenstand von Unteransprüchen.

Erfindungsgemäß ist das Querschnittsprofil der Spannut durch zwei Schleifspuren erzeugt, wobei eine erste Schleifspur einen die Spanfläche sowie zumindest einen ersten Abschnitt der Nutgrundfläche enthaltenden Teil des Querschnittsprofils abbildet und eine von der ersten Schleifspur getrennt erzeugte zweite Schleifspur einen die Zahnrückenfläche sowie zumindest einen zweiten Abschnitt der Nutgrundfläche enthaltenden Teil des Querschnittsprofils abbildet. Das heißt also, dass bei der Herstellung der Spannut durch zwei Schleifspuren ein geeigneter Kompromiss hinsichtlich der Breite der verwendeten Schleifscheibe erzielt wurde. Zur Erzeugung kürzerer Nutausläufe ist eine schmale Schleifscheibe vorteilhaft, wohingegen eine breitere Schleifscheibe zur Reduzierung der Schleifvorgänge (oftmals auch als Nutschnitte bzw. Hauptschnitte und Nebenschnitte bezeichnet) und die damit einhergehende höhere Wirtschaftlichkeit der Herstellung des Zerspanungswerkzeugs vorteilhaft ist. Wird die erfindungsgemäße breite Nut in zwei Schleifvorgängen (bzw. mit einer dementsprechenden Schleifscheibenbreite) erzeugt, kann ein ausreichend kurzer Nutauslauf sowie eine wirtschaftliche Fertigung sichergestellt werden.

Erfindungsgemäß läuft die zweite Schleifspur axial vor der ersten Schleifspur aus. Das heißt also, dass die zweite Schleifspur vorzugsweise von der Werkzeugstirnseite bis zum Nutauslaufbereich (bis zum Beginn des Nutauslaufbereichs) erzeugt wird, d.h. über die Schneidenlänge, während die erste Schleifspur über die Schneidenlänge hinaus erzeugt wird. Man kann also sagen, dass der Nutauslaufbereich durch die erste Schleifspur allein gebildet ist, d.h. dass die zweite Schleifspur an bzw. vor dem Nutauslaufbereich endet. Dies hat den Vorteil, dass der Nutauslaufbereich axial kürzer ausgestaltet werden kann.

Erfindungsgemäß verläuft die Nutgrundfläche des Zerspanungswerkzeugs über einen vorbestimmten Bogenwinkel im Wesentlichen entlang des Kerndurchmessers des Zerspanungswerkzeugs. Dabei wird unter einem Verlauf "entlang des Kerndurchmessers" verstanden, dass sich die Nutgrundfläche im Wesentlichen entlang eines Kreisbogens mit dem Kerndurchmesser des Zerspanungswerkzeugs als Kreisbogendurchmesser verläuft, was z.B. bei dem eingangs diskutierten Schaftfräser nicht der Fall ist. Der vorbestimmte Bogenwinkel ist größer als ein infinitesimal kleiner Bogenwinkel. Mit anderen Worten kann unter einem Verlauf entlang des Kerndurchmessers verstanden werden, dass die Nutgrundfläche (radial nach außen) konvex gekrümmt ist. Erfindungsgemäß ist die Nutgrundfläche konvex gekrümmt. Der vorbestimmte Bogenwinkel ist erfindungsgemäß größer-gleich 10%, weiter bevorzugt größer-gleich 15 % oder 25%, insbesondere größer-gleich 25 %, einer Zahnteilung des Zerspanungswerkzeugs. Weiter bevorzugt ist der vorbestimmte Bogenwinkel kleiner-gleich 90 %, bevorzugt kleiner-gleich 85% oder 80% , insbesondere kleiner-gleich 75 % oder 70%, der Zahnteilung.

Erfindungsgemäß ist der Krümmungsradius R_{NG} der konvex gekrümmten Nutgrundfläche konstant und vorzugsweise im Bereich von 0,3 • D ≤ R_{NG} ≤ 0,4 • D liegen, insbesondere bei R_{NG} = 0,33 • D, wobei D der Nenndurchmesser des Zerspanungswerkzeugs ist. Der Krümmungsradius der Nutgrundfläche liegt demnach im abgeschlossenen Bereich von 30 bis 40 % des Nenndurchmessers. Da die Nutgrundfläche entlang des Kerndurchmessers verläuft, entspricht ihr Krümmungsradius der Hälfte des Kerndurchmessers. So kann eine breitere Spannut ohne Vergrößern der Tiefe der Spannut realisiert werden.

Die Zahnteilung kann gleich oder ungleich sein, d.h. die Zähne können in gleichem Winkelabstand oder ungleichem Winkelabstand, um die Werkzeugachse angeordnet sein. Der Kerndurchmesser des Zerspanungswerkzeugs ist durch den tiefsten (radial innersten) Punkt einer Spannut definiert, wobei alle Spannuten vorzugsweise gleich tief sind.

Wenn die Nutgrundfläche über einen vorbestimmten Bogenwinkel im Wesentlichen entlang des Kerndurchmessers des Zerspanungswerkzeugs verläuft, sind die Spannuten im Vergleich zum eingangs diskutierten Werkzeug breit und flach, woraus ein großer Kerndurchmesser resultiert. Wenn sich die Spannuten, die den Kerndurchmesser im Gegensatz zu dem Stand der Technik nicht nur tangieren und sich dann wieder von dem Kerndurchmesser lösen, über einen vorbestimmten Bogenwinkel (größer-gleich 10%) entlang des Kerndurchmessers erstrecken, kann der Kerndurchmesser und damit die Stabilität des Zerspanungswerkzeugs vergrößert werden. Dass das Volumen der Spannuten durch die flache Ausbildung verringert wird, wird durch die Breite der Spannuten kompensiert. Durch die breite Ausbildung der Spannuten kann somit ein ausreichend großes (oder im Vergleich zum Stand der Technik sogar größeres) Spanraumvolumen für die Spanabfuhr bereitgestellt werden. Somit wirkt sich eine breite und flache Spannut für die Spanabfuhr des Zerspanungswerkzeugs nicht nachteilig aus. Mit anderen Worten kann durch die Erstreckung der Nutgrundfläche entlang des Kerndurchmessers gleichzeitig eine maximale Stabilität sowie ein hohes Zerspanungsvolumen realisiert werden.

Anders gesagt kann unter einer breiten Spannut eine Spannut verstanden werden, die eine Spannutbreite hat, die größer als die Tiefe der Spannut ist. Die Tiefe der Spannut ist als eine Differenz zwischen dem Nennradius (d.h. dem halben Nenndurchmesser) und dem Kernradius (d.h. dem halben Kerndurchmesser) definiert. Das heißt, dass die Tiefe entlang eines Radius des Zerspanungswerkzeugs gemessen wird. Die Breite der Spannut ist als ein Abstand zwischen der Umfangsschneide eines Zahns und der Freifläche eines in Schneidrichtung des Zerspanungswerkzeugs benachbarten Zahns festgelegt. Das heißt, dass die Breite senkrecht entlang eines durch die Umfangsschneide verlaufenden Radius gemessen wird. Einfach gesagt schließt sich in Schneidrichtung gesehen an die Umfangsschneide eines ersten Zahns, eine dem ersten Zahn zugeordnete Spannut an, an die sich wiederum in Schneidrichtung gesehen die Freifläche und dann die Umfangsschneide eines benachbarten Zahns anschließt.

Darüber hinaus hat die Erstreckung entlang des Kerndurchmessers den Vorteil, dass durch eine flachere Nut und die daraus resultierende geringere Zahnhöhe das an der Nutgrundfläche bzw. am Zahnfuß wirkende Biegemoment auf die Zähne gering gehalten werden kann. Dadurch wird die Stabilität des Zerspanungswerkzeugs erhöht. Ein weiterer Vorteil der flachen Nut besteht darin, dass je flacher die Nut ist, im Nutauslauf entstehende Kerben, Kanten oder dergleichen weniger prägnant ausgebildet sind. Durch weniger prägnante Kerben, Kanten oder dergleichen im Nutauslaufbereich erfährt das Zerspanungswerkzeug bei einer spanabhebenden Bearbeitung im Nutauslaufbereich geringere Biege- oder Torsionsspannungen, was zu einer reduzierten Bruchgefahr beiträgt. Darüber hinaus kann der Nutauslauf bei einem die Spanuttiefe bestimmenden geringeren Unterschied zwischen dem Nenndurchmesser und dem Kerndurchmesser auch axial kürzer ausgestaltet werden, so dass wiederum eine Auskraglänge des Zerspanungswerkzeugs über seine in einen Werkzeughalter eingespannten Schaftabschnitt hinaus, durch welche die Nutauslauflänge kompensiert werden muss, bei einem kürzeren Nutauslauf verringert und die Stabilität des Zerspanungswerkzeugs weiter erhöht werden kann.

Vorzugsweise weist das Zerspanungswerkzeug an seiner Werkzeugstirnseite einer der Zahl der Umfangsschneiden entsprechende Zahl von Stirnschneiden auf, von deren Schneidenecken jeweils eine Umfangsschneide ausgeht. Somit ist das Zerspanungswerkzeug zur Werkstückbearbeitung ins Volle geeignet.

Gemäß einer bevorzugten Ausführungsform kann entgegen der Schneidrichtung eine von der Umfangsschneide bis zur Zahnrückenfläche (senkrecht zu einem durch die Umfangsschneide verlaufenden Radius) gemessene Zahnbreite B, d.h. eine Breite der (ersten) Freifläche, jedes Zahns im Bereich von 0,15 • D ≤ B ≤ 0,4 • D, bevorzugt von 0,2 • D ≤ B ≤ 0,3 • D liegen, insbesondere bei d = 0,25 • D, wobei D der Nenndurchmesser des Zerspanungswerkzeugs ist. Die Zahnbreite liegt demnach in dem abgeschlossenen (d.h. die Bereichsgrenzen enthaltenden) Bereich von 15 bis 40 %, vorzugsweise von 20 bis 30 % des Nenndurchmessers. Durch die verhältnismäßig große Zahnbreite (Stegbreite) kann die Stabilität der Umfangsschneide, insbesondere der Schneidecken, erheblich erhöht werden. Somit wird eine höhere Werkzeugstabilität erreicht, wodurch wiederum höhere Schnittgeschwindigkeiten und/oder Vorschübe möglich sind.

Gemäß einer Weiterbildung der bevorzugten Ausführungsform kann die Zahnbreite von der Werkzeugstirnseite bis zum Nutauslaufbereich gleichbleibend sein. Das heißt, dass die Zahnbreite - auch bei einer ungleichen Zahnteilung oder bei einer ungleichen Spiralisierung (d.h. bei ungleichen Steigungswinkeln der Umfangsschneiden bzw. Spannuten) - nicht variiert, sondern über den gesamten Schneidteil/die gesamte axiale Erstreckung der Umfangsschneide gleichbleibend und groß ist. Somit wird eine hohe Zahnstabilität gewährleistet.

Gemäß einer Weiterbildung der bevorzugten Ausführungsform können sich die erste Schleifspur und die zweite Schleifspur in Umfangsrichtung, insbesondere im Bereich der dadurch erzeugten Nutgrundfläche, überdecken. Das heißt, dass die Nutgrundfläche sowohl durch die erste Schleifspur als auch durch die zweite Schleifspur erzeugt wird. Dies hat den Vorteil, dass bei einer Abnutzung der verwendeten Schleifscheibe die Schleifscheibe breiter wird, wodurch sich eine größere Überdeckung innerhalb der Spannut ergibt und prozesssichere Fertigung sichergestellt werden kann.

Gemäß einer Weiterbildung der bevorzugten Ausführungsform kann die erste Schleifspur mittels einer Schleifscheibe erzeugt sein, wobei die Schleifscheibe zwei zueinander um einen Schleifscheibenwinkel, insbesondere von 45°, geneigte Schleifkanten besitzen, die über einen Übergangsradius ineinander übergehen. Das heißt, dass beispielsweise eine Standardscheibe, wie eine 45°-Schleifscheibe, zum Schleifen des Zerspanungswerkzeugs verwendet werden kann. Durch die Verwendung von Standardscheiben für das Nutprofil kann ein größerer Durchmesserbereich abgedeckt werden. Der Übergangsradius Rss kann vorzugsweise im Bereich von 0,15 • D ≤ R_{SS} ≤ 0,25 • D liegen, insbesondere bei Rss = 0,2 • D, wobei D der Nenndurchmesser des Zerspanungswerkzeugs ist. Der Übergangsradius Rss liegt demnach in dem abgeschlossenen (d.h. die Bereichsgrenzen enthaltenden) Bereich von 15 bis 25 % des Nenndurchmessers. Somit ist der Übergang weich/rund ausgestaltet, um eine erhöhte Kerbwirkung durch einen scharfkantigen Übergang zu vermeiden, da dieser Übergangsradius insbesondere einem Übergang zwischen dem Nutauslaufbereich und dem Schaft entspricht. Somit lässt sich die Form der verwendeten Schleifscheibe an der damit geschliffenen Spannut bzw. dem Nutauslauf direkt entnehmen.

Innerhalb der Schneidenlänge kann das Nutprofil durch die zweite Schleifspur korrigiert werden, was aber in dem Nutauslaufbereich, in welchen das erzeugte Profil der Form der Schleifscheibe entspricht, nicht möglich ist. Insbesondere ist es demnach erforderlich, die Form der "längeren" Schleifspur hinsichtlich ihrer Kerbwirkung zu optimieren. Bei Verwendung der gleichen Schleifscheibe bzw. desselben Schleifscheibenprofils für die erste Schleifspur und die zweite Schleifspur entspricht der Übergangsradius einem Krümmungsradius zwischen der Zahnrückenfläche eines Zahns und der Nutgrundfläche des in Schneidrichtung/Werkzeugdrehrichtung nächstliegenden Zahns. Mit anderen Worten wird durch die Verwendung einer abgerundeten Schleifscheibe Nutauslaufbereich entlastet und die Radialsteifigkeit erhöht, was zur Reduzierung von Kerbwirkungen führt. Eine solche Reduzierung der Kerbwirkung ist insbesondere bei längeren Auskraglängen von hoher Bedeutung.

Gemäß einer bevorzugten Ausführungsform kann der Nenndurchmesser des Zerspanungswerkzeugs kleiner gleich 3mm sein. Alternativ kann der Nenndurchmesser des Zerspanungswerkzeugs auch im Bereich größer 3 mm bis zu 12 mm liegen.

Gemäß einer bevorzugten Ausführungsform kann der Kerndurchmesser des Zerspanungswerkzeugs im Bereich von 0,6 • D ≤ d ≤ 0,7 • D liegen, insbesondere bei d = 0,66 • D, wobei D der Nenndurchmesser des Zerspanungswerkzeugs ist. Der Kerndurchmesser liegt demnach in dem abgeschlossenen (d.h. die Bereichsgrenzen enthaltenden) Bereich von 60 bis 70 % des Nenndurchmessers. Ein Kerndurchmesser, der im Bereich von 0,6 • D ≤ d ≤ 0,7 • D liegt, wird als ein hoher Kerndurchmesser verstanden. Daraus folgt, dass eine flache Spannut im Bereich von 15 bis 20 % des Nenndurchmessers liegt. Durch die Ausgestaltung des Zerspanungswerkzeugs mit dem hohen Kerndurchmesser kann die geometrische Festigkeit erhöht werden und der Nutauslaufbereich verkürzt werden.

Gemäß einer bevorzugten Ausführungsform kann die Breite der Spannut von der Werkzeugstirnseite bis zum Nutauslaufbereich, insbesondere bei einer ungleichen Zahnteilung oder ungleichen Spiralisierung des Zerspanungswerkzeugs, variieren. Dabei ist die Breite der Spannut bei ungleicher Zahnteilung insbesondere von Nut zu Nut unterschiedlich, d.h. in Umfangsrichtung benachbarte Spannuten haben unterschiedliche Breiten, bzw. variiert bei ungleicher Spiralisierung über die axiale Erstreckung, d.h. von der Werkzeugstirn bis zum Nutauslauf. Zusätzlich oder alternativ kann die Tiefe der Spannut, gemäß einer bevorzugten Ausführungsform von der Werkzeugstirnseite bis zum Nutauslaufbereich im Wesentlichen gleichbleibend sein. Durch die variierende Breite der Spannut und/oder die im Wesentlichen gleichbleibende Tiefe der Spannut kann ermöglicht werden, dass die Zahnbreite bzw. die Freiflächenbreite über die gesamte Schneidenlänge/die axiale Erstreckung des Schneidteils konstant bleibt, auch wenn das Zerspanungswerkzeug eine ungleiche Zahnteilung oder ungleiche Spiralisierung besitzt. Somit können die Zahnbreite und der Spanwinkel definiert und unabhängig voneinander einstellen bzw. variieren.

Gemäß einer bevorzugten Ausführungsform kann ein Übergang zwischen der Zahnrückenfläche und der Freifläche des in Werkzeugdrehrichtung davorliegenden bzw. nächstliegenden (d.h. in Schneidrichtung gesehen) Zahns konvex gekrümmt sein, wobei der Krümmungsradius R_{ÜFZ} vorzugsweise im Bereich von 0,15 • D ≤ R_{ÜFZ} ≤ 0,25 • D liegt, insbesondere bei R_{ÜFZ} = 0,2 • D, wobei D der Nenndurchmesser des Zerspanungswerkzeugs ist. Somit kann ein weicher/runder Übergang zu der Freifläche, der sich insbesondere auch im Nutauslaufbereich zeigt, realisiert werden.

Gemäß einer bevorzugten Ausführungsform kann ein Übergang zwischen der Spanfläche und der Nutgrundfläche konkav gekrümmt sein, wobei der Krümmungsradius R_{ÜNS} vorzugsweise im Bereich von 0,1 • D ≤ R_{ÜNS} ≤ 0,15 • D liegt, insbesondere bei R_{ÜNS} = 0,12 • D, wobei D der Nenndurchmesser des Zerspanungswerkzeugs ist.

Gemäß einer bevorzugten Ausführungsform kann die Umfangsschneide einen (ersten) Freiflächenwinkel/Freiwinkel besitzen, der vorzugsweise zwischen 7° und 18° liegt, bevorzugt zwischen 10° und 14°, insbesondere bei 12°.

Gemäß einer bevorzugten Ausführungsform kann die Umfangsschneide einen positiven Spanwinkel besitzt, der vorzugsweise zwischen 1° und 14° liegt, bevorzugt bei 9° bis 11°, insbesondere bei 10°, oder dass die Umfangsschneide einen negativen Spanwinkel besitzt, der vorzugsweise zwischen 1° und 14° liegt, bevorzugt bei 9° bis 11°, insbesondere bei 10°, oder dass die Umfangsschneide einen Spanwinkel von 0° besitzt. Diese Spanwinkelwerte haben sich als besonders geeignet erwiesen.

Gemäß einer Weiterbildung der bevorzugten Ausführungsform kann die Spanfläche, insbesondere bei positivem Spanwinkel, konkav gekrümmt sein, wobei der Krümmungsradius R_{SP} der Spanfläche konstant ist und vorzugsweise im Bereich von 0,1 • D ≤ R_{SP} ≤ 0,2 • D liegt, insbesondere bei R_{SP} = 0,16 • D, wobei D der Nenndurchmesser des Zerspanungswerkzeugs ist.

Gemäß einer bevorzugten Ausführungsform kann die Zahnrückenfläche einen zweiten Freiflächenwinkel/Freiwinkel besitzen, der vorzugsweise zwischen 7° und 18° liegt, insbesondere bei 12°.

Gemäß einer bevorzugten Ausführungsform kann die Zahnrückenfläche konkav gekrümmt oder gerade sein, wobei der Krümmungsradius R_{ZR} konstant ist und vorzugsweise im Bereich von 0,3 • D ≤ R_{ZR} ≤ 0,5 • D liegt, insbesondere bei R_{ZR} = 0,35 • D bis 0,45 • D, wobei D der Nenndurchmesser des Zerspanungswerkzeugs ist.

Gemäß einer bevorzugten Ausführungsform kann das Zerspanungswerkzeug mehrere, insbesondere drei, alternativ vier bis sechs, Spannuten aufweisen, die in Umfangsrichtung mit gleicher oder ungleicher Winkelteilung um die Werkzeugachse angeordnet sind. Bei einem Zerspanungswerkzeug mit drei Umfangsschneiden und zugehörigen Spannuten hat es sich als besonders vorteilhaft ergeben, wenn der vorbestimmte Bogenwinkel, über den sich die Nutgrundfläche entlang des Kerndurchmessers erstreckt, 20° bis 90°, insbesondere mehr als 40° beträgt.

Gemäß einer bevorzugten Ausführungsform kann die Spannut entlang der Werkzeugachse wendelförmig ausgebildet sein, wobei die Spannut eine gleiche/konstante oder ungleiche Spiralisierung/Spiralsteigung besitzt.

Gemäß einer bevorzugten Ausführungsform kann der Schneidteil materialeinstückig, vorzugsweise aus Hartmetall, beispielsweise aus Cermet, ausgebildet sein.

Die Aufgabe der Erfindung wird ebenfalls durch das Verfahren des Patentanspruchs 10 zum Schleifen einer Spannut eines rundlaufenden Zerspanungswerkzeugs gelöst. Das Zerspanungswerkzeug ist vorzugsweise wie oben beschrieben aufgebaut und weist einen sich entlang einer Werkzeugachse erstreckenden Schaft und einen an den Schaft axial anschließenden Schneidteil auf. An dem Schneidteil sind mehrere Zähne mit jeweils einer durch eine Freifläche und eine Spanfläche definierten Umfangsschneide und Spannuten ausgebildet sind, die zum Schaft hin in einem Nutauslaufbereich auslaufen und deren Querschnittsprofile senkrecht zur Werkzeugachse jeweils durch die Spanfläche, eine Nutgrundfläche und eine an die Freifläche eines in Werkzeugdrehrichtung nächstliegenden Zahns angrenzende Zahnrückenfläche definiert sind. Die Nutgrundfläche verläuft über einen vorbestimmten Bogenwinkel im Wesentlichen entlang des Kerndurchmessers des Zerspanungswerkzeugs.

In dem erfindungsgemäßen Verfahren wird die Spannut in zwei Schleifgängen erzeugt. Dabei bildet eine in einem ersten Schleifgang erzeugte erste Schleifspur einen die Spanfläche sowie zumindest einen ersten Abschnitt der Nutgrundfläche enthaltenden Teil des Querschnittsprofils ab und eine in einem zweiten Schleifgang von der ersten Schleifspur getrennt erzeugte zweite Schleifspur einen die Zahnrückenfläche sowie zumindest einen zweiten Abschnitt der Nutgrundfläche enthaltenden Teil des Querschnittsprofils ab. Genau zwei Schleifgänge bieten einen Kompromiss zwischen einer wirtschaftlichen Herstellung und einer exakten Herstellung der gewünschten breiten und flachen Spannut. Erfindungsgemäß läuft die zweite Schleifspur axial vor der ersten Schleifspur aus. Dadurch kann die Länge des Nutauslaufs, wie oben beschrieben, verkürzt werden. Die Nutgrundfläche ist konvex gekrümmt, ein Krümmungsradius der Nutgrundfläche ist konstant und der Mittelpunkt des Krümmungsradius liegt auf der Werkzeugachse, wobei der vorbestimmte Bogenwinkel größer-gleich 10 % der Zahnteilung des Schneidteils ist.

Gemäß einer bevorzugten Ausführungsform des Verfahren können die erste Schleifspur und zweite Schleifspur mittels einer Schleifscheibe, wie einer geraden oder profilierten Rechteckschleifscheibe oder einer Trapezschleifscheibe, erzeugt werden, die zwei zueinander um einen Schleifscheibenwinkel, insbesondere von 45°, geneigte, über einen Übergangsradius ineinander übergehende Schleifkanten besitzt. Beispielsweise kann in der ersten Schleifspur eine erste Schleifkante die Spanfläche erzeugen und eine zweite Schleifkante kann die Nutgrundfläche erzeugen. Beispielsweise kann in der zweiten Schleifspur eine erste Schleifkante die Nutgrundfläche erzeugen und eine zweite Schleifkante kann die Zahnrückenfläche erzeugen. Vorzugsweise kann der Übergangsradius im Bereich von 0,15 • D ≤ R_{SS} ≤ 0,25 • D liegt, insbesondere bei Rss = 0,2 • D, wobei D der Nenndurchmesser des Zerspanungswerkzeugs ist. Besonders bevorzugt, können die erste und zweite Schleifspur vorzugsweise mittels ein und derselben Schleifscheibe erzeugt werden.

Gemäß einer bevorzugten Ausführungsform des Verfahren können/kann eine Ausrichtung der Schleifscheibe, insbesondere eine Anstellung der Schleifscheibe und/oder eine Eintauchtiefe der Schleifscheibe, relativ zu einer Werkzeugachse des zu schleifenden Zerspanungswerkzeug in dem ersten Schleifgang und dem zweiten Schleifgang gleich sein. Dabei wird das zu schleifende Zerspanungswerkzeug zwischen dem ersten Schleifgang und dem zweiten Schleifgang um seine Werkzeugachse um einen vorbestimmten Winkel, vorzugsweise in Abhängigkeit der Überdeckung der beiden Schleifspuren und in Abhängigkeit eines Durchmessers des zu schleifenden Zerspanungswerkzeugs, gedreht.

### Kurzbeschreibung der Figuren

Fig. 1 ist eine Seitenansicht eines Längenabschnitts einer bevorzugten Ausführungsform eines erfindungsgemäßen rundlaufenden Zerspanungswerkzeugs;
Fig. 2 zeigt schematisch einen Querschnitt im Bereich des Schneidteils der bevorzugten Ausführungsform;
Fig. 3 zeigt schematisch die Schleifkontur einer zum Schleifen des Zerspanungswerkzeugs verwendeten Schleifscheibe;
Fig. 4 zeigt schematisch einen Querschnitt im Bereich des Schneidteils der bevorzugten Ausführungsform;
Fign. 5A bis F5 zeigen schematisch verschiedene Querschnitte an verschiedenen axialen Stellen im Bereich des Schneidteils der bevorzugten Ausführungsform; und
Fig. 6 ist eine Stirnansicht der bevorzugten Ausführungsform.

### Beschreibung einer bevorzugten Ausführungsform

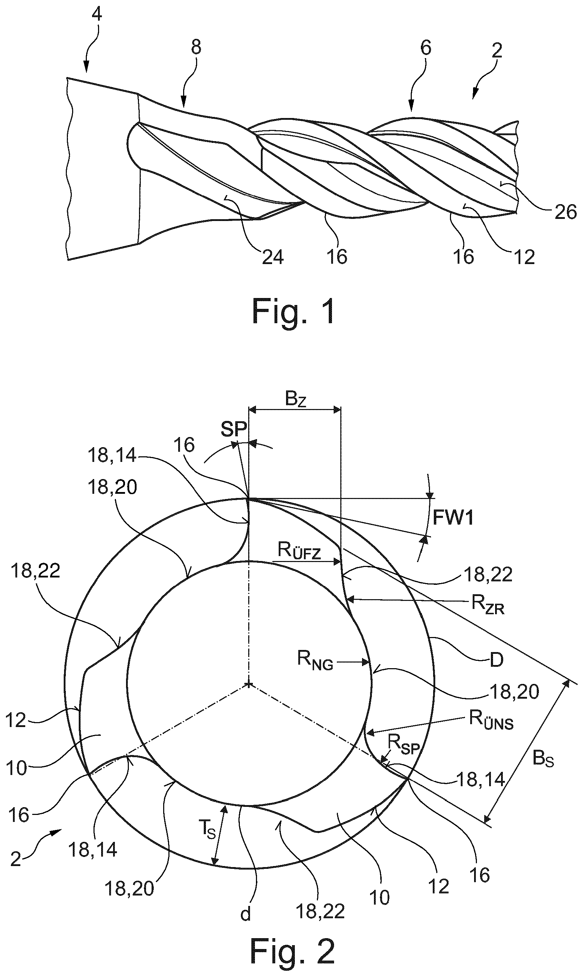

Nachstehend wird eine bevorzugte Ausführungsform der Erfindung auf der Basis der Figuren 1 bis 6 beschrieben, in denen dieselben Funktionsabschnitte oder Merkmale mit denselben Bezugszeichen gekennzeichnet sind.

Fig. 1 zeigt eine Seitenansicht eines Längenabschnitts der bevorzugten Ausführungsform eines rundlaufenden Zerspanungswerkzeugs 2. In der dargestellten Ausführungsform ist das Zerspanungswerkzeug 2 als ein Schaftfräser ausgebildet. Das Zerspanungswerkzeug 2 weist einen sich entlang einer Werkzeugachse erstreckenden Schaft 4 auf, wobei in Fig. 1 aus Gründen der Übersichtlichkeit der linke Endabschnitt des Schafts 4 nicht gezeigt ist. Über den Schaft 4 kann das Zerspanungswerkzeug 2 zum Drehantrieb um seine (nicht gezeigte) Werkzeugachse (Längsmittelachse) in einer Werkzeughalter eingespannt werden. Das Zerspanungswerkzeug 2 weist einen Schneidteil 6 auf, wobei in Fig. 1 aus Gründen der Übersichtlichkeit der rechte Endabschnitt des Schneidteils 6 nicht gezeigt ist. Der Schneidteil 6 schließt über einen Nutauslaufbereich 8 axial an den Schaft 4 an.

An dem Schneidteil 6 ist erfindungsgemäß wenigstens ein Zahn 10 mit einer durch eine Freifläche 12 und eine Spanfläche 14 definierten Umfangsschneide 16 ausgebildet. Die Umfangsschneide 16 des Zerspanungswerkzeugs 2 ist auf einem Nenndurchmesser D des Zerspanungswerkzeugs 2 angeordnet bzw. der Nenndurchmesser D ist durch die Umfangsschneide 16 definiert. In der dargestellten Ausführungsform ist das Zerspanungswerkzeug 2 mehrschneidig, hier dreischneidig, ausgebildet. Das heißt, dass das Zerspanungswerkzeug 2 drei Zähne 10 mit jeweils einer Umfangsschneide 16 hat. Die Umfangsschneiden 16 können wie in der dargestellten Ausführungsform wendelförmig (schraubenlinienförmig) verlaufen. In einer nicht dargestellten abgewandelten Ausführungsform können die Umfangsschneiden 16 stattdessen geradlinig verlaufen. Des Weiteren kann ein erfindungsgemäßes Zerspanungswerkzeug statt drei Zähne/Umfangsschneiden zwei, vier oder mehrere Zähne /Umfangsschneiden besitzen. Die Länge, über die sich der Schneidteil 6 in Axialrichtung erstreckt, wird als Schneidteillänge bezeichnet. Bei einer Werkstückbearbeitung sind die Umfangsschneiden 16 des Zerspanungswerkzeugs 2 in spanabhebendem Eingriff mit dem Werkstück.

Das Zerspanungswerkzeug 2 weist je Zahn 10 eine entlang des Zahns 10 verlaufende Spannut 18 auf, die sich entlang des jeweils zugeordneten Zahns 10 über den Schneidteil 6 erstreckt. In der dargestellten Ausführungsform weist das Zerspanungswerkzeug 2 daher drei Spannuten 18 auf. Die Spannuten 18 dienen zum Abführen der durch die jeweils zugeordnete Umfangsschneide 16/den jeweils zugeordneten Zahn 10 abgehobenen Späne. Jede Spannut 18 läuft innerhalb des Nutauslaufbereichs 8 aus. Der Nutauslaufbereich 8 ist demnach ein Längenabschnitt des Zerspanungswerkzeugs 2, der den Schneidteil 6 mit dem Schaft 4 verbindet.

Jede Spannut 18 hat ein Querschnittsprofil senkrecht zur Werkzeugachse, das durch die Spanfläche 14, eine an die Spanfläche 14 anschließende Nutgrundfläche 20 und eine (an die Nutgrundfläche 20 anschließende und) an die Freifläche 12 eines in Schneidrichtung/Werkzeugdrehrichtung nächstliegenden Zahns 10 angrenzende Zahnrückenfläche 22 definiert ist, wie es in Fig. 2 dargestellt ist.

Die Breite der Spannut Bs entspricht dem (vom Werkzeugdurchmesser aus senkrechten) Abstand vom Schnittpunkt des Werkzeugdurchmessers und der Umfangsschneide 16 des zugehörigen Zahns 10 bis zur Freifläche 12 des in Schneidrichtung/Werkzeugdrehrichtung des Zerspanungswerkzeugs 2 nächstliegenden Zahns 10, wie es in Fig. 2 angegeben ist. Ein radial innerster oder tiefster Punkt der Spannut 18 liegt auf dem Kerndurchmesser d des Zerspanungswerkzeugs 2. Die Tiefe der Spannut Ts bemisst sich als senkrecht zur Werkzeugachse gemessener Abstand zwischen der Umfangsschneide 16 (bzw. dem Nenndurchmesser D des Zerspanungswerkzeugs 2) und dem tiefsten/radial innersten Punkt der Spannut 18 (bzw. dem Kerndurchmesser d).

Das erfindungsgemäße Zerspanungswerkzeug 2 zeichnet sich insbesondere durch ein breites und flaches Querschnittsprofil der Spannut 18 aus. Dies wird unter anderem dadurch erreicht, dass die Nutgrundfläche 20 jeder Spannut 18 über einen vorbestimmten Bogenwinkel im Wesentlichen entlang des Kerndurchmessers d des Zerspanungswerkzeugs 2 verläuft. Dabei wird unter "entlang des Kerndurchmessers verlaufen" verstanden, dass sich die Nutgrundfläche 20 nicht, zumindest nicht wesentlich, vom Kerndurchmesser d löst, sondern über den vorbestimmten Bogenwinkel entlang eines Kreisbogens mit dem Kerndurchmesser d als Kreisdurchmesser verläuft. Der vorbestimmte Bogenwinkel ist von der Anzahl der Zähne 10/Umfangschneiden 16, d.h. der Zahnteilung (= 360° geteilt durch die Zahl der Zähne/Umfangsschneiden sowohl für Werkzeuge mit gleicher Zahnteilung als auch Werkzeuge mit ungleicher Zahnteilung), abhängig. Es hat sich gezeigt, dass es vorteilhaft ist, wenn der vorbestimmte Bogenwinkel größer-gleich 10 % 15 %, 20 % oder besonders bevorzugt 25 % der Zahnteilung des Zerspanungswerkzeugs ist. Alternativ oder zusätzlich kann der vorbestimmte Bogenwinkel vorzugsweise etwa 20 bis 50 % der Breite der Spannut Bs betragen. Der vorbestimmte Bogenwinkel kann nicht unbegrenzt sein, da ein zunehmender Bogenwinkel eine maximal mögliche Zahnbreite Bz begrenzt. Daher sollte der vorbestimmte Bogenwinkel vorzugsweise kleiner-gleich 90 %, 85 %, 75 % oder besonders bevorzugt 70% der Zahnteilung sein. Durch den Verlauf der Nutgrundfläche 20 entlang des Kerndurchmessers d kann demnach eine relativ große Breite der Spannut Bs und damit ein ausreichend großes Spanraumvolumen erreicht werden, was erlaubt, die Tiefe der Spannut Ts relativ klein zu halten. Generell wird unter einer breiten Spannut zumindest verstanden, dass die Breite der Spannut Bs größer als die Tiefe der Spannut Ts ist.

Das heißt also, dass bei dem erfindungsgemäßen Zerspanungswerkzeug 2 aufgrund des Verlaufs entlang des Kerndurchmessers d die Nutgrundfläche 20 in radialer Richtung konvex nach außen gekrümmt ist. Dabei ist der Krümmungsradius R_{NG} der Nutgrundfläche 20 konstant und liegt der Mittelpunkt des Krümmungsradius R_{NG} auf der Werkzeugachse. Somit kann der erfindungsgemäße Verlauf der Nutgrundgrundfläche entlang des Kerndurchmessers d erreicht werden. Als bevorzugt hat es sich erwiesen, wenn der Krümmungsradius R_{NG} im abgeschlossenen Bereich von 30 bis 40 % des Nenndurchmessers D liegt, insbesondere bei 33% des Nenndurchmessers D. Das heißt also, dass der Kerndurchmesser d 60 bis 70 % des Nenndurchmessers D entspricht, insbesondere bei 66 % des Nenndurchmessers liegt. Ein solcher Kerndurchmesser d wird als ein großer Kerndurchmesser bezeichnet. Dementsprechend wird eine solche Spannut 18 als eine flache Spannut bezeichnet.

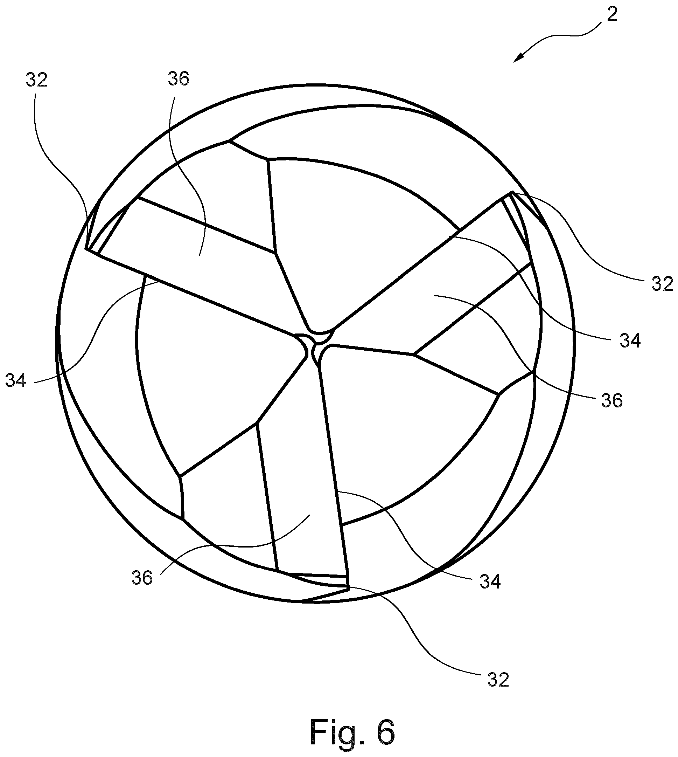

Darüber hinaus zeichnet sich eine Ausführungsform des erfindungsgemäßen Zerspanungswerkzeug 2 dadurch aus, dass die Zähne 10 in dem gesamten Schneidteil eine große und vorzugsweise gleichbleibende Zahnbreite Bz besitzen. Die Zahnbreite Bz entspricht dem (vom Werkzeugdurchmesser aus senkrechten) Abstand vom Schnittpunkt des Werkzeugdurchmessers und der Umfangsschneide 16 bis zur Zahnrückenfläche 22, wie es in Fig. 2 angegeben ist. Das heißt, dass die Zahnbreite Bz einer Breite der Freifläche 12 entspricht. Insbesondere kann die Zahnbreite Bz jedes Zahns 10 im abgeschlossenen Bereich von 15 bis 40 % des Nenndurchmessers D, bevorzugt 20 bis 30 %, des Nenndurchmessers D liegen, insbesondere bei 25 % des Nenndurchmessers D liegen. Die Zähne sind 10 dadurch ausreichend stabil, insbesondere an den Umfangsschneiden 16, wodurch hohe Schnittgeschwindigkeiten und/oder Vorschübe möglich sind. Die Zahnbreite Bz jedes Zahns 10 kann vorzugsweise von der Werkzeugstirnseite (vgl. Fig. 6) bis zum Nutauslaufbereich 8, d.h. über die gesamte Schneidteillänge, konstant/gleichbleibend sein. Um die konstante Zahnbreite Bz auch bei dem in der dargestellten Ausführungsform ungleich geteilt (z.B. dreischneidig) oder ungleich spiralisiert ausgebildeten Zerspanungswerkzeug 2 über die gesamte axiale Erstreckung der Umfangsschneiden 16 fertigen zu können, kann die Spannut 18 über die Schneidenlänge/von der Werkzeugstirnseite bis zum Nutauslaufbereich 8 oder die Spannuten 18 zueinander variieren. Insbesondere variiert die Form der Spannut 18 über die axiale Erstreckung bei ungleicher Spiralisierung (d.h. bei ungleichem Steigungswinkel der Umfangsschneiden 16 bzw. Spannuten 18), d.h., dass die Spannuten 18 insbesondere unterschiedliche Spannutbreiten an der Werkzeugstirnseite und im Nutauslaufbereich haben. Dahingegen variieren bei ungleicher Zahnteilung die Formen in Umfangsrichtung benachbarter Spannuten 18 zueinander, d.h., dass die Spannut 18 des einen Zahns 10 und die Spannut 18 des nächsten Zahns 10 insbesondere unterschiedliche Spannutbreiten zueinander haben.

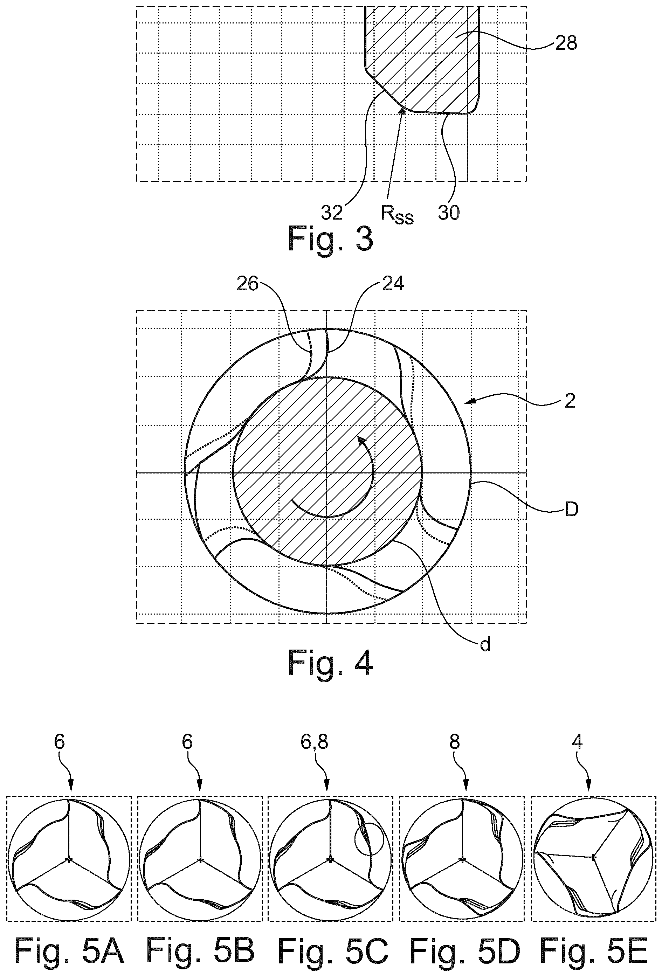

Eine erste Schleifspur bildet einen die Spanfläche 14 sowie zumindest einen ersten Abschnitt der Nutgrundfläche 20 enthaltenden Teil des Querschnittsprofils der Spannut ab. Eine von der ersten Schleifspur getrennt erzeugte zweite Schleifspur bildet einen die Zahnrückenfläche 22 sowie zumindest einen zweiten Abschnitt der Nutgrundfläche 20 enthaltenden Teil des Querschnittsprofils ab. Das heißt, dass die erste Schleifspur 24 einen an die Umfangsschneide 16 angrenzenden Teil der Spannut 18 erzeugt und die zweite Schleifspur 26 einen an die Freifläche 12 des in Schneidrichtung/Werkzeugdrehrichtung nächstliegenden Zahns 10/ Umfangsschneide 16 angrenzenden Teil der Spannut 18 erzeugt (vgl. insbesondere Fig. 4). Die Fig. 4 zeigt die erste Schleifspur 24, die an der die Spanfläche darstellenden vollen Linie beginnt und in Schneidrichtung/Werkzeugdrehrichtung betrachtet an der punktierten Linie endet, und die zweite Schleifspur 26, die bei der gestrichelten Linie beginnt und an der die Zahnrückenfläche des in Schneidrichtung/Werkzeugdrehrichtung nächstliegenden Zahns darstellenden vollen Linie endet. In der dargestellten Ausführungsform überdecken sich die erste Schleifspur 24 und die zweite Schleifspur 26 somit teilweise, insbesondere in dem der Nutgrundfläche 20 entsprechenden Breitenbereich. Die Überdeckung kann vorzugsweise zumindest 30 % betragen. Das heißt, dass die Nutgrundfläche 20 sowohl durch die erste Schleifspur 24 als auch durch die zweite Schleifspur 26 erzeugt wird.

Darüber hinaus hat es sich als vorteilhaft herausgestellt, dass die zweite Schleifspur 26 erfindungsgemäß axial vor der ersten Schleifspur 24 ausläuft, wie es in Fig. 1 dargestellt ist. Das heißt also, dass die zweite Schleifspur 24 vorzugsweise von der Werkzeugstirnseite bis zum Nutauslaufbereich 8 (bis zum Beginn des Nutauslaufbereichs) erzeugt wird, d.h. über die Schneidenlänge, während die erste Schleifspur 26 über die Schneidenlänge hinaus (bis zum Ende des Nutauslaufbereichs) erzeugt wird. Man kann also sagen, dass der Nutauslaufbereich durch die erste Schleifspur 24 allein gebildet ist, d.h. dass die zweite Schleifspur 26 an bzw. vor dem Nutauslaufbereich endet. Dies ist insbesondere in Fign. 5A bis 5E zu erkennen, die ein Querschnittsprofil an der Werkzeugstirnseite (Fig. 5A), mitten im Bereich des Schneidteils 6 (Fig. 5B), an dem Übergang zwischen dem Schneidteil 6 und dem Nutauslaufbereich 8 (Fig. 5C), in dem Nutauslaufbereich 8 (Fig. 5D) und im Bereich des Schafts 4 (Fig. 5E) zeigt. Durch das axial unterschiedliche Auslaufen der beiden Schleifspuren 24, 26 ergibt sich in dem Nutauslaufbereich 8 eine weniger abrupte Änderung des Querschnittsprofils der Spannut 18 im Vergleich zu dem Fall, wenn beide Schleifspuren 24, 26 axial gleich auslaufen würden, so dass der Nutauslaufbereich 8 ohne Inkaufnahme von prägnanten Kerben axial kurz gehalten sein kann. Das Querschnittsprofil der Spannut 18 im Nutauslaufbereich 8 entspricht folglich der Form einer für die Erzeugung der ersten Schleifspur 26 verwendeten Schleifscheibe 28, die in Fig. 3 skizziert ist. Daher ist für einen runden/weichen Übergang des Nutauslaufbereichs 8 zu dem Schaft 4 die Form der verwendeten Schleifscheibe 28 entscheidend, die nachfolgend insbesondere mit Bezug auf Fig. 3 näher beschrieben wird.

Insbesondere kann die zur Erzeugung der ersten Schleifspur 24 verwendete Schleifscheibe 28 zwei zueinander um einen Schleifscheibenwinkel geneigte Schleifkanten 30, 32 besitzen. Beispielsweise kann der Schleifscheibenwinkel 45° betragen, so dass eine sogenannte 45°-Schleifscheibe verwendet werden kann. Eine erste Schleifkante 30 kann die Spanfläche 14 erzeugen und eine zweite Schleifkante 32 kann die Nutgrundfläche 20 (bzw. einen Teil der Nutgrundfläche 20) erzeugen. Die beiden Schleifkanten 30, 32 gehen über einen Übergangsradius Rss ineinander über. Vorzugsweise liegt der Übergangsradius Rss in dem abgeschlossenen Bereich von 15 bis 25 % des Nenndurchmessers D, insbesondere bei 20% des Nenndurchmessers D. Ein solcher Übergangsradius hat sich als geeignet zur Reduzierung der Kerbwirkung an dem Nutauslauf herausgestellt.

Zusätzlich kann zur Erzeugung der zweiten Schleifspur 26 dieselbe Schleifscheibe 28 verwendet werden. Alternativ kann aber auch eine andere Schleifscheibe verwendet werden. Bei Verwendung der gleichen Schleifscheibe 28 (oder desselben Schleifscheibenprofils) für die erste Schleifspur 24 und die zweite Schleifspur 26 kann die erste Schleifkante 30 die Nutgrundfläche 20 (bzw. einen Teil der Nutgrundfläche 20) erzeugen und die zweite Schleifkante 32 kann die Zahnrückenfläche 22 erzeugen. Vorzugsweise entspricht der Übergangsradius Rss einem Krümmungsradius R_{ÜFZ} zwischen der Zahnrückenfläche 22 jedes Zahns 10 und der Freifläche 12 des in Schneidrichtung/Werkzeugdrehrichtung nächstliegenden Zahns 10. Der Krümmungsradius R_{ÜFZ} liegt vorzugsweise in dem abgeschlossenen Bereich von 15 bis 25 % des Nenndurchmessers D, insbesondere bei 20% des Nenndurchmessers D.

Weiterhin kann ein Übergang zwischen der Spanfläche und der Nutgrundfläche konkav gekrümmt sein, wie es in Fig. 2 gezeigt ist. Insbesondere kann der Krümmungsradius R_{SP} in dem abgeschlossenen Bereich von 10 bis 15 % des Nenndurchmessers D liegen, insbesondere bei 12 % des Nenndurchmessers D liegen.

In der dargestellten Ausführungsform besitzt die Umfangsschneide 16 (bzw. der Zahn 10) einen (ersten) Freiflächenwinkel/Freiwinkel FW1, der vorzugsweise in dem abgeschlossenen Bereich von 7° bis 18° liegt, bevorzugt in dem abgeschlossenen Bereich von 10° bis 14°, insbesondere bei 12°. In der dargestellten Ausführungsform besitzt der Zahn 10 einen zweiten Freiflächenwinkel/Freiwinkel, der vorzugsweise zwischen 7° und 18° liegt, insbesondere bei 12°.

In der dargestellten Ausführungsform besitzt die Umfangsschneide 16 einen positiven Spanwinkel, der vorzugsweise in dem abgeschlossenen Bereich von 1° bis 14° liegt, bevorzugt 9° bis 11°, insbesondere bei 10°. Alternativ kann die Umfangsschneide 16 einen negativen Spanwinkel besitzen, der vorzugsweise in dem abgeschlossenen Bereich von 1° bis 14° liegt, bevorzugt 9° bis 11°, insbesondere bei 10°, auch wenn dies nicht explizit dargestellt ist. Weiter alternativ kann die Umfangsschneide 16 einen Spanwinkel von 0° besitzen, auch wenn dies nicht explizit dargestellt ist.

In der dargestellten Ausführungsform ist die Spanfläche 14 konkav gekrümmt. Vorzugsweise kann der Krümmungsradius R_{SP} der Spanfläche 14 konstant sein und in dem abgeschlossenen Bereich von 10 bis 20 % des Nenndurchmessers D liegen, insbesondere bei 16 % des Nenndurchmessers D liegen.

Gemäß einer bevorzugten Ausführungsform kann die Zahnrückenfläche 22 konkav gekrümmt oder gerade sein, wobei der Krümmungsradius R_{ZR} vorzugsweise konstant ist und vorzugsweise in dem abgeschlossenen Bereich von 30 bis 50 % des Nenndurchmessers D, insbesondere 35 bis 45 % des Nenndurchmessers D liegt.

Auch wenn das Zerspanungswerkzeug 2 in der dargestellten Ausführungsform nur mit drei Umfangsschneiden 16 und zugehörigen Spannuten 18 ausgebildet ist, kann das Zerspanungswerkzeug auch eine andere Anzahl an Umfangsschneiden 16, beispielsweise vier bis sechs, besitzen. Die Umfangsschneiden 16 können in Umfangsrichtung mit gleicher oder ungleicher Zahnteilung um die Werkzeugachse angeordnet sein. Die Spannut 18 bzw. die Umfangsschneide 16 kann zudem eine gleiche/konstante Steigung oder alternativ eine ungleiche Steigung über ihre axiale Erstreckung besitzen.

In dem erfindungsgemäßen Verfahren wird die Spannut 18 in das oben beschriebene Zerspanungswerkzeugs 2 eingeschliffen. Dabei wird in einem ersten Schleifgang die erste Schleifspur 24 erzeugt, die einen die Spanfläche 14 sowie zumindest einen ersten Abschnitt der Nutgrundfläche 20 enthaltenden Teil des Querschnittsprofils der Spannut 18 abbildet. In einem zweiten Schleifgang wird die von der ersten Schleifspur 24 getrennt erzeugte zweite Schleifspur 26 erzeugt, die einen die Zahnrückenfläche 22 sowie zumindest einen zweiten Abschnitt der Nutgrundfläche 20 enthaltenden Teil des Querschnittsprofils abbildet. Dabei läuft die zweite Schleifspur 26 axial vor der ersten Schleifspur 24 aus.

Vorzugsweise werden die erste Schleifspur und/oder zweite Schleifspur mittels der oben beschriebenen Schleifscheibe 28 erzeugt, welche die zwei zueinander um den Schleifscheibenwinkel geneigten, über den Übergangsradius ineinander übergehende Schleifkanten 30, 32 besitzt. Insbesondere können die erste und zweite Schleifspur vorzugsweise mittels ein und derselben Schleifscheibe 28 erzeugt werden. Dabei ist eine Ausrichtung der Schleifscheibe 28, insbesondere eine Anstellung der Schleifscheibe 28 und/oder eine Eintauchtiefe der Schleifscheibe 28, relativ zu der Werkzeugachse des zu schleifenden Zerspanungswerkzeug 2 in dem ersten Schleifgang und dem zweiten Schleifgang gleich. Das zu schleifende Zerspanungswerkzeug 2 wird zwischen dem ersten Schleifgang und dem zweiten Schleifgang um seine Werkzeugachse um einen vorbestimmten Winkel, vorzugsweise in Abhängigkeit der Überdeckung der beiden Schleifspuren 24, 26 und in Abhängigkeit des Nenndurchmessers D des zu schleifenden Zerspanungswerkzeugs 2, gedreht.

Fig. 6 zeigt eine Stirnansicht des Zerspanungswerkzeugs 2. Der Schneidteil 6 des Zerspanungswerkzeugs 2 weist die drei Zähne 10 auf. Jeder Zahn 10 weist wie oben beschrieben die durch die Freifläche 12 und die Spanfläche 14 definierte Umfangsschneide 16 auf. Jede Umfangsschneide 16 erstreckt sich wendelförmig jeweils von einem Schneideneck 32 einer Stirnschneide 34 aus, was in Fig. 6 dargestellt ist. Das Zerspanungswerkzeug 2 weist demnach drei Stirnschneiden 34 auf, an die sich jeweils eine Stirnschneiden-Freifläche 36 anschließt.

## Patentansprüche

1. Rundlaufendes Zerspanungswerkzeug (2), insbesondere Schaftfräser, mit einem sich entlang einer Werkzeugachse erstreckenden Schaft (4) und einem an den Schaft (4) anschließenden Schneidteil (6), an dem mehrere Zähne (10) mit jeweils einer durch eine Freifläche (12) und eine Spanfläche (14) definierten Umfangsschneide (16) und Spannuten (18) ausgebildet sind, die zum Schaft (4) hin in einem Nutauslaufbereich (8) auslaufen und deren Querschnittsprofile senkrecht zur Werkzeugachse jeweils durch die Spanfläche (14), eine den Kerndurchmesser (d) des Zerspanungswerkzeugs (2) bestimmende Nutgrundfläche (20) und eine an die Freifläche (12) eines in Werkzeugdrehrichtung nächstliegenden Zahns (10) angrenzende Zahnrückenfläche (22) definiert sind, wobei die Nutgrundfläche (20) über einen vorbestimmten Bogenwinkel im Wesentlichen entlang des Kerndurchmessers (d) des Zerspanungswerkzeugs (2) verläuft, wobei der vorbestimmte Bogenwinkel größer-gleich 10 % der Zahnteilung des Schneidteils (6) ist, wobei
das Querschnittsprofil jeder Spannut (18) durch genau zwei Schleifspuren (24, 26) erzeugt ist, wobei eine erste Schleifspur (24) einen die Spanfläche (14) sowie zumindest einen ersten Abschnitt der Nutgrundfläche (20) enthaltenden Teil des Querschnittsprofils abbildet und eine von der ersten Schleifspur (24) getrennt erzeugte zweite Schleifspur (26) einen die Zahnrückenfläche (22) sowie zumindest einen zweiten Abschnitt der Nutgrundfläche (20) enthaltenden Teil des Querschnittsprofils abbildet und axial vor der ersten Schleifspur (24) ausläuft, wobei
die Nutgrundfläche (20) konvex gekrümmt ist, ein Krümmungsradius (R_{NG}) der Nutgrundfläche (20) konstant ist und der Mittelpunkt des Krümmungsradius (R_{NG}) auf der Werkzeugachse liegt.

2. Zerspanungswerkzeug (2) nach Anspruch 1, **dadurch gekennzeichnet, dass** eine von der Umfangsschneide (16) bis zur Zahnrückenfläche (22) gemessene Zahnbreite (B_{z}) jedes Zahns (10) im Bereich von 0,15 • D ≤ B_{z} ≤ 0,4 • D liegt, wobei D der Nenndurchmesser des Zerspanungswerkzeugs (2) ist, und die Zahnbreite (B_{z}) vorzugsweise von der Werkzeugstirnseite bis zum Nutauslaufbereich (8) gleichbleibend ist.

3. Zerspanungswerkzeug (2) nach Anspruch 1 oder 2, **dadurch gekennzeichnet, dass** die Spannut eine Breite (Bs) besitzt, die größer als eine Tiefe der Spannut (Ts) ist.

4. Zerspanungswerkzeug (2) nach einem der Ansprüche 1 bis 3, **dadurch gekennzeichnet, dass** beide Schleifspuren (24, 26) auf dem Kerndurchmesser (d) liegen.

5. Zerspanungswerkzeug (2) nach einem der Ansprüche 1 bis 4, **dadurch gekennzeichnet, dass** die erste Schleifspur (24) mittels einer Schleifscheibe (28) erzeugt ist, wobei die Schleifscheibe zwei zueinander um einen Schleifscheibenwinkel, geneigte Schleifkanten (30, 32) besitzt, die über einen Übergangsradius (Rss) ineinander übergehen, wobei der Übergangsradius (Rss) im Bereich von 0,15 • D ≤ Rss ≤ 0,25 • D liegt, wobei D der Nenndurchmesser des Zerspanungswerkzeugs (2) ist.

6. Zerspanungswerkzeug (2) nach einem der Ansprüche 1 bis 5, **dadurch gekennzeichnet, dass** der Kerndurchmesser (d) des Zerspanungswerkzeugs (2) im Bereich von 0,6 • D ≤ d ≤ 0,7 • D liegt, wobei D der Nenndurchmesser des Zerspanungswerkzeugs (2) ist.

7. Zerspanungswerkzeug (2) nach einem der Ansprüche 1 bis 6, **dadurch gekennzeichnet, dass** die Breite der Spannut (Bs) von der Werkzeugstirnseite bis zum Nutauslaufbereich (8) variiert.

8. Zerspanungswerkzeug (2) nach einem der Ansprüche 1 bis 7, **dadurch gekennzeichnet, dass** die Tiefe der Spannut (18), von der Werkzeugstirnseite bis zum Nutauslaufbereich (8) im Wesentlichen gleichbleibend ist.

9. Zerspanungswerkzeug nach einem der Ansprüche 1 bis 8, **dadurch gekennzeichnet, dass** der Schneidteil (6) materialeinstückig ausgebildet ist.

10. Verfahren zum Schleifen einer Spannut eines rundlaufenden Zerspanungswerkzeugs (2), das einen sich entlang einer Werkzeugachse erstreckenden Schaft (4) und einen an den Schaft (4) anschließenden Schneidteil (6) aufweist, an dem mehrere Zähne (10) mit jeweils einer durch eine Freifläche (12) und eine Spanfläche (14) definierten Umfangsschneide (16) und Spannuten (18) ausgebildet sind, die zum Schaft (4) hin in einem Nutauslaufbereich (8) auslaufen und deren Querschnittsprofile senkrecht zur Werkzeugachse jeweils durch die Spanfläche (14), eine Nutgrundfläche (20) und eine an die Freifläche (12) eines in Werkzeugdrehrichtung nächstliegenden Zahns (10) angrenzende Zahnrückenfläche (22) definiert sind, wobei die Nutgrundfläche (20) über einen vorbestimmten Bogenwinkel im Wesentlichen entlang des Kerndurchmessers (d) des Zerspanungswerkzeugs (2) verläuft, wobei der vorbestimmte Bogenwinkel größer-gleich 10 % der Zahnteilung des Schneidteils (6) ist,
wobei die Spannut (18) in zwei Schleifgängen erzeugt wird, wobei eine in einem ersten Schleifgang erzeugte erste Schleifspur (24) einen die Spanfläche (14) sowie zumindest einen ersten Abschnitt der Nutgrundfläche (20) enthaltenden Teil des Querschnittsprofils abbildet und eine in einem zweiten Schleifgang von der ersten Schleifspur getrennt erzeugte zweite Schleifspur (26) einen die Zahnrückenfläche (22) sowie zumindest einen zweiten Abschnitt der Nutgrundfläche (20) enthaltenden Teil des Querschnittsprofils abbildet, wobei die zweite Schleifspur (26) axial vor der ersten Schleifspur (24) ausläuft, wobei
die Nutgrundfläche (20) konvex gekrümmt ist, ein Krümmungsradius (R_{NG}) der Nutgrundfläche (20) konstant ist und der Mittelpunkt des Krümmungsradius (R_{NG}) auf der Werkzeugachse liegt.

11. Verfahren nach Anspruch 10, **dadurch gekennzeichnet, dass** die erste Schleifspur (24) und die zweite Schleifspur (26) mittels einer Schleifscheibe (28) erzeugt werden, die zwei zueinander um einen Schleifscheibenwinkel geneigte, über einen Übergangsradius (Rss) ineinander übergehende Schleifkanten (20, 32) besitzt, wobei der Übergangsradius (Rss) im Bereich von 0,15 • D ≤ Rss ≤ 0,25 • D liegt, wobei D der Nenndurchmesser des Zerspanungswerkzeugs (2) ist.

12. Verfahren nach Anspruch 10 oder 11, **dadurch gekennzeichnet, dass** eine Ausrichtung der Schleifscheibe (28) relativ zu der Werkzeugachse des zu schleifenden Zerspanungswerkzeug (2) in dem ersten Schleifgang und dem zweiten Schleifgang gleich ist, wobei das zu schleifende Zerspanungswerkzeug (2) zwischen dem ersten Schleifgang und dem zweiten Schleifgang um seine Werkzeugachse um einen vorbestimmten Winkel in Abhängigkeit der Überdeckung der beiden Schleifspuren (24, 26) und/oder in Abhängigkeit eines Nenndurchmessers (D) des zu schleifenden Zerspanungswerkzeugs (2) gedreht wird.

## Claims

1. A rotary cutting tool (2), in particular an end mill, comprising a shank (4) extending along a tool axis and a cutting part (6) adjoining the shank (4), on which a plurality of teeth (10) are formed, each having a circumferential cutting edge (16) defined by a clearance face (12) and a rake face (14), and flutes (18), which run out toward the shank (4) in a flute run-out region (8), and the cross-sectional profiles of which perpendicular to the tool axis are each defined by the rake face (14), a flute bottom surface (20) determining the core diameter (d) of the cutting tool (2), and a tooth back surface (22) adjoining the clearance face (12) of a tooth (10) closest in the tool rotation direction, wherein the flute bottom surface (20) extends substantially along the core diameter (d) of the cutting tool (2) over a predetermined arc angle, wherein the predetermined arc angle is greater than or equal to 10 % of the tooth pitch of the cutting part (6), wherein the cross-sectional profile of each flute (18) is produced by exactly two grinding tracks (24, 26), wherein a first grinding track (24) represents a part of the cross-sectional profile containing the rake face (14) and at least a first portion of the flute bottom surface (20), and a second grinding track (26), produced separately from the first grinding track (24), represents a part of the cross-sectional profile containing the tooth back surface (22) and at least a second portion of the flute bottom surface (20) and terminates axially before the first grinding track (24), wherein the flute bottom surface (20) is convexly curved, a radius of curvature (R_{NG}) of the flute bottom surface (20) is constant, and the center of the radius of curvature (R_{NG}) lies on the tool axis.

2. The cutting tool (2) according to claim 1, **characterized in that** a tooth width (B_{z}) of each tooth (10), measured from the circumferential cutting edge (16) to the tooth back surface (22), lies in the range of 0,15 • D ≤ B_{z} ≤ 0,4 • D, wherein D is the nominal diameter of the cutting tool (2), and the tooth width (B_{z}) preferably remains constant from the tool end face to the flute run-out region (8).

3. The cutting tool (2) according to claim 1 or 2, **characterized in that** the flute has a width (B_{S}) which is greater than a depth of the flute (T_{S}).

4. The cutting tool (2) according to any one of claims 1 to 3, **characterized in that** both grinding tracks (24, 26) lie on the core diameter (d).

5. The cutting tool (2) according to any one of claims 1 to 4, **characterized in that** the first grinding track (24) is produced by means of a grinding wheel (28), wherein the grinding wheel has two grinding edges (30, 32) inclined relative to one another by a grinding wheel angle and merging into one another via a transition radius (R_{SS}), wherein the transition radius (Rss) lies in the range of 0,15 • D ≤ Rss ≤ 0,25 • D, wherein D is the nominal diameter of the cutting tool (2).

6. The cutting tool (2) according to any one of claims 1 to 5, **characterized in that** the core diameter (d) of the cutting tool (2) lies in the range of 0,6 • D ≤ d ≤ 0,7 • D, wherein D is the nominal diameter of the cutting tool (2).

7. The cutting tool (2) according to any one of claims 1 to 6, **characterized in that** the width of the flute (B_{S}) varies from the tool end face to the flute run-out region (8).

8. The cutting tool (2) according to any one of claims 1 to 7, **characterized in that** the depth of the flute (18), from the tool end face to the flute run-out region (8), remains substantially constant.

9. The cutting tool according to any one of claims 1 to 8, **characterized in that** the cutting part (6) is formed integrally in one piece.

10. A method for grinding a flute of a rotary cutting tool (2), which has a shank (4) extending along a tool axis and a cutting part (6) adjoining the shank (4), on which a plurality of teeth (10) are formed, each having a circumferential cutting edge (16) defined by a clearance face (12) and a rake face (14), and flutes (18), which run out toward the shank (4) in a flute run-out region (8), and the cross-sectional profiles of which perpendicular to the tool axis are each defined by the rake face (14), a flute bottom surface (20), and a tooth back surface (22) adjoining the clearance face (12) of a tooth (10) closest in the tool rotation direction, wherein the flute bottom surface (20) extends substantially along the core diameter (d) of the cutting tool (2) over a predetermined arc angle, wherein the predetermined arc angle is greater than or equal to 10 % of the tooth pitch of the cutting part (6), wherein the flute (18) is produced in two grinding passes, wherein a first grinding track (24), produced in a first grinding pass, represents a part of the cross-sectional profile containing the rake face (14) and at least a first portion of the flute bottom surface (20), and a second grinding track (26), produced separately from the first grinding track in a second grinding pass, represents a part of the cross-sectional profile containing the tooth back surface (22) and at least a second portion of the flute bottom surface (20), wherein the second grinding track (26) terminates axially before the first grinding track (24), wherein the flute bottom surface (20) is convexly curved, a radius of curvature (R_{NG}) of the flute bottom surface (20) is constant, and the center of the radius of curvature (R_{NG}) lies on the tool axis.

11. The method according to claim 10, **characterized in that** the first grinding track (24) and the second grinding track (26) are produced by means of a grinding wheel (28) which has two grinding edges (20, 32) inclined relative to one another by a grinding wheel angle and transitioning into one another via a transition radius (R_{SS}), wherein the transition radius (R_{SS}) lies in the range of 0,15 • D ≤ R_{SS} ≤ 0,25 • D, wherein D is the nominal diameter of the cutting tool (2).

12. The method according to claim 10 or 11, **characterized in that** an orientation of the grinding wheel (28) relative to the tool axis of the cutting tool (2) to be ground is the same in the first grinding pass and the second grinding pass, wherein the cutting tool (2) to be ground is rotated about its tool axis between the first grinding pass and the second grinding pass by a predetermined angle depending on the overlap of the two grinding tracks (24, 26) and/or depending on a nominal diameter (D) of the cutting tool (2) to be ground.

## Revendications

1. Outil d'usinage par enlèvement de copeaux rotatif (2), en particulier fraise à queue, avec une queue (4) s'étendant le long d'un axe d'outil et une partie de coupe (6) se raccordant à la queue (4), partie sur laquelle plusieurs dents (10) sont formées avec respectivement un tranchant périphérique (16) défini par une surface libre (12) et une surface de coupe (14) et des goujures (18) qui se terminent vers la queue (4) dans une zone de sortie de goujure (8) et dont les profils de coupe transversale, perpendiculaires à l'axe d'outil, sont respectivement définis par la surface de coupe (14), une surface de fond de goujure (20) déterminant le diamètre de noyau (d) de l'outil d'usinage par enlèvement de copeaux (2) et une surface de dépouille (22) adjacente à la surface libre (12) d'une dent (10) immédiatement voisine dans le sens de rotation d'outil, dans lequel la surface de fond de goujure (20) s'étend sur un angle d'arc prédéterminé sensiblement le long du diamètre de noyau (d) de l'outil d'usinage par enlèvement de copeaux (2), dans lequel l'angle d'arc prédéterminé est supérieur ou égal à 10 % du pas de dent de la partie de coupe (6), dans lequel
le profil de coupe transversale de chaque goujure (18) est généré par exactement deux traces de meulage (24, 26), dans lequel une première trace de meulage (24) représente une partie du profil de coupe transversale comprenant la surface de coupe (14) ainsi qu'au moins une première portion de la surface de fond de goujure (20), et une seconde trace de meulage (26), réalisée séparément de la première trace de meulage (24) représente une partie du profil de coupe transversale comprenant la surface de dépouille (22) ainsi qu'au moins une seconde portion de la surface de fond de goujure (20) et se termine axialement devant la première trace de meulage (24), dans lequel
la surface de fond de goujure (20) est incurvée de manière convexe, un rayon de courbure (R_{NG}) de la surface de fond de goujure (20) est constant et le centre du rayon de courbure (R_{NG}) se situe sur l'axe d'outil.

2. Outil d'usinage par enlèvement de copeaux (2) selon la revendication 1, **caractérisé en ce qu'**une largeur de dent (B_{z}) de chaque dent (10), mesurée du tranchant périphérique (16) à la surface de dépouille (22), se situe dans la plage de 0,15 • D ≤ B_{z} ≤ 0,4 • D, dans lequel D est le diamètre nominal de l'outil d'usinage par enlèvement de copeaux (2), et la largeur de dent (B_{Z}) est de préférence constante de la surface avant de l'outil à la zone de sortie de goujure (8).

3. Outil d'usinage par enlèvement de copeaux (2) selon la revendication 1 ou 2, **caractérisé en ce que** la goujure comporte une largeur (B_{S}) qui est supérieure à la profondeur de la goujure (T_{S}).

4. Outil d'usinage par enlèvement de copeaux (2) selon l'une quelconque des revendications 1 à 3, **caractérisé en ce que** les deux traces de meulage (24, 26) se situent sur le diamètre de noyau (d).

5. Outil d'usinage par enlèvement de copeaux (2) selon l'une quelconque des revendications 1 à 4, **caractérisé en ce que** la première trace de meulage (24) est générée au moyen d'une meule (28), dans lequel la meule comporte deux arêtes de meulage (30, 32) inclinées l'une par rapport à l'autre selon un angle de meulage, qui se rejoignent via un rayon de transition (R_{SS}), dans lequel le rayon de transition (R_{SS}) se situe dans la plage de 0,15 • D ≤ R_{SS} ≤ 0,25 • D, dans lequel D est le diamètre nominal de l'outil d'usinage par enlèvement de copeaux (2).

6. Outil d'usinage par enlèvement de copeaux (2) selon l'une quelconque des revendications 1 à 5, **caractérisé en ce que** le diamètre de noyau (d) de l'outil d'usinage par enlèvement de copeaux (2) se situe dans la plage de 0,6 • D ≤ d ≤ 0,7 • D, dans lequel D est le diamètre nominal de l'outil d'usinage par enlèvement de copeaux (2).

7. Outil d'usinage par enlèvement de copeaux (2) selon l'une quelconque des revendications 1 à 6, **caractérisé en ce que** la largeur de la goujure (B_{S}) varie de la surface avant de l'outil à la zone de sortie de goujure (8).

8. Outil d'usinage par enlèvement de de copeaux (2) selon l'une quelconque des revendications 1 à 7, **caractérisé en ce que** la profondeur de la goujure (18) est sensiblement constante de la surface avant de l'outil à la zone de sortie de goujure (8).

9. Outil d'usinage par enlèvement de copeaux selon l'une quelconque des revendications 1 à 8, **caractérisé en ce que** la partie de coupe (6) est conçue d'un seul tenant.

10. Procédé de meulage d'une goujure d'un outil d'usinage par enlèvement de copeaux rotatif (2) qui présente une queue (4) s'étendant le long d'un axe d'outil et une partie de coupe (6) se raccordant à la queue (4), partie sur laquelle plusieurs dents (10) sont formées avec respectivement un tranchant périphérique (16) défini par une surface libre (12) et une surface de coupe (14) et des goujures (18) qui se terminent vers la queue (4) dans une zone de sortie de goujure (8) et dont les profils de coupe transversale, perpendiculaires à l'axe d'outil, sont respectivement définis par la surface de coupe (14), une surface de fond de goujure (20) et une surface de dépouille (22) adjacente à la surface libre (12) d'une dent (10) immédiatement voisine dans le sens de rotation d'outil, dans lequel la surface de fond de goujure (20) s'étend sur un angle d'arc prédéterminé sensiblement le long du diamètre de noyau (d) de l'outil d'usinage par enlèvement de copeaux (2),
dans lequel l'angle d'arc prédéterminé est supérieur ou égal à 10 % du pas de dent de la partie de coupe (6), dans lequel la goujure (18) est générée en deux passes de meulage, dans lequel une première trace de meulage (24) générée lors d'une première passe de meulage représente une partie du profil de coupe transversale comprenant la surface de coupe (14) ainsi qu'au moins une première portion de la surface de fond de goujure (20), et une seconde trace de meulage (26) générée lors d'une seconde passe de meulage séparément de la première trace de meulage, représente une partie du profil de coupe transversale comprenant la surface de dépouille (22) ainsi qu'au moins une seconde section de la surface de fond de goujure (20), dans lequel la seconde trace de meulage (26) se termine axialement devant la première trace de meulage (24), dans lequel la surface de fond de goujure (20) est incurvée de manière convexe, le rayon de courbure (R_{NG}) de la surface de fond de goujure (20) est constant et le point central du rayon de courbure (R_{NG}) se situe sur l'axe d'outil.

11. Procédé selon la revendication 10, **caractérisé en ce que** la première trace de meulage (24) et la seconde trace de meulage (26) sont générées au moyen d'une meule (28) qui comporte deux arêtes de meulage (20, 32) inclinées l'une par rapport à l'autre selon un angle de meulage, se rejoignant l'une l'autre via un rayon de transition (R_{SS}), dans lequel le rayon de transition (R_{SS}) se situe dans la plage de 0,15 • D ≤ R_{SS} ≤ 0,25 • D, dans lequel D est le diamètre nominal de l'outil d'enlèvement de copeaux (2).

12. Procédé selon la revendication 10 ou 11, **caractérisé en ce que** l'orientation de la meule (28) par rapport à l'axe d'outil de l'outil d'usinage par enlèvement de copeaux (2) à meuler est identique lors de la première passe de meulage et de la seconde passe de meulage, dans lequel l'outil d'usinage par enlèvement de copeaux (2) est tourné entre la première passe de meulage et la seconde passe de meulage autour de son axe d'outil selon un angle prédéterminé en fonction du chevauchement des deux traces de meulage (24, 26) et/ou en fonction d'un diamètre nominal (D) de l'outil d'usinage par enlèvement de copeaux (2) à meuler.
